# EUROPEAN PATENT APPLICATION

(11) **EP 1 939 429 A2**
(43) Date of publication of application: **02.07.2008**
(21) Application number: 07122483.6
(22) Date of filing: 06.12.2007
(51) Int. Cl.: F02C 7/32

(54) **Power take-off system and gas turbine engine assembly including same**

(30) Priority: 21.12.2006 US 614623
(71) Applicant: General Electric Company, Schenectady, NY 12345 (US)
(72) Inventor: Moniz, Thomas Ory, Loveland, OH 45140 (US); Schilling, Jan Christopher, Middletown, OH 45044 (US); Orlando, Robert Joseph, West Chester, OH 45069 (US); Patt, Raymond Felix, Cincinnati, OH 45215 (US)
(74) Representative: Bedford, Grant Richard

(57) **Abstract**

A power take-off system (100) for a gas turbine engine assembly (10) is provided. The gas turbine engine (10) includes a first spool (40) and a second spool (42). The power take off system (100) further includes a starter (102) coupled to the first spool using a first shaft (112), and a generator (104) coupled to the second spool using a second shaft (122), the first shaft (112) is circumferentially offset from the second shaft (122) by an angle α.

## Description

This invention relates generally to gas turbine engines, and more specifically to a dual input/output power take-off system configured to start the gas turbine engine and also configured to generate electrical power.

At least some known gas turbine engines used with aircraft include a core engine having, in serial flow arrangement, a compressor which compresses airflow entering the engine, a combustor which bums a mixture of fuel and air, and low and high-pressure turbines which extract energy from airflow discharged from the combustor to generate thrust.

As aircraft accessory power demands have increased, there also has been an increased need to run the gas turbine engines at idle speeds that may be higher than other engines not subjected to increased power demands. More specifically, increasing the gas turbine engine idle speed enables the increased power demands to be met without sacrificing compressor stall margins. However, the increased idle speed may also generate thrust levels for the engine which are higher than desired for both flight idle decent operations and/or during ground idle operations. Over time, continued operation with increased thrust levels during such idle operations may increase maintenance costs and the increased fuel flow requirements may also increase aircraft operating expenses.

In one aspect according to the present invention, a method for assembling a gas turbine engine including a core gas turbine engine, a low-pressure turbine, a starter, and a generator is provided. The method includes coupling a starter to the core gas turbine engine using a first shaft, and coupling a generator to the low-pressure turbine using a second shaft, wherein the first shaft is circumferentially offset from the second shaft by an angle α.

In another aspect, a power take-off system for a gas turbine engine is provided. The system includes a starter coupled to a first spool using a first shaft, and a generator coupled to the second spool using a second shaft, the first shaft is circumferentially offset by the second shaft by an angle α.

In a further aspect, a gas turbine engine assembly is provided. The gas turbine engine assembly includes a first spool, a second spool, and a power take-off system comprising a starter coupled to the first spool using a first shaft, and a generator coupled to the second spool using a second shaft, the first shaft is circumferentially offset by the second shaft by an angle α.

Various aspects and embodiments of the present invention will now be described in connection with the accompanying drawings, in which:
Figure 1 is a simplified schematic illustration of a gas turbine engine assembly including an exemplary starter/generator system;
Figure 2 is an end view of a portion of the power take-off system shown in Figure 1;
Figure 3 is a cross-sectional view of a portion of the power take-off system shown in Figure 2;
Figure 4 is a cross-sectional view of a portion of the power take-off system shown in Figure 3;
Figure 5 is a cross-sectional view of a portion of the power take-off system shown in Figure 2; and
Figure 6 is a cross-sectional view of a portion of the power take-off system shown in Figure 5.

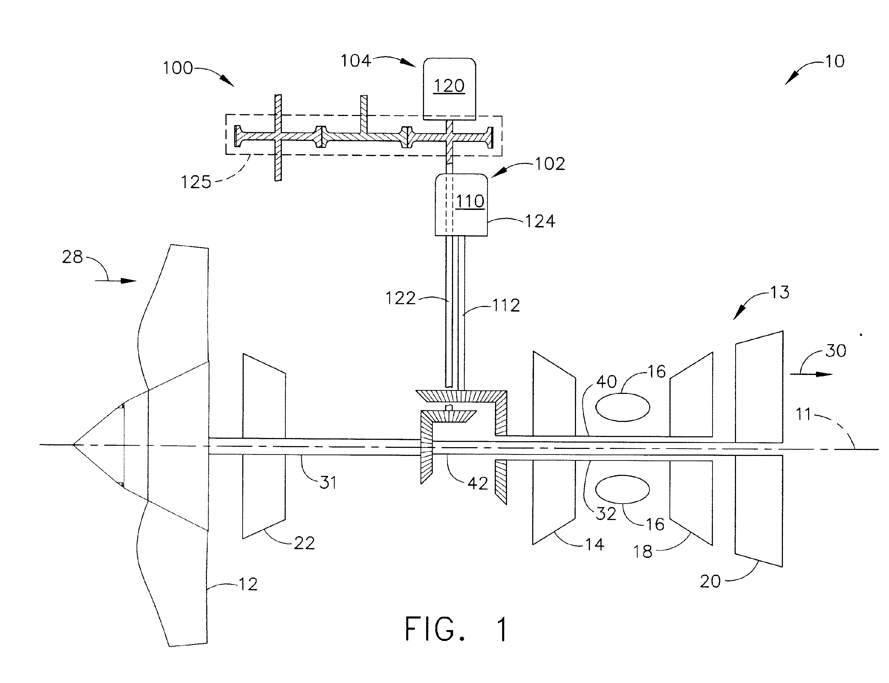

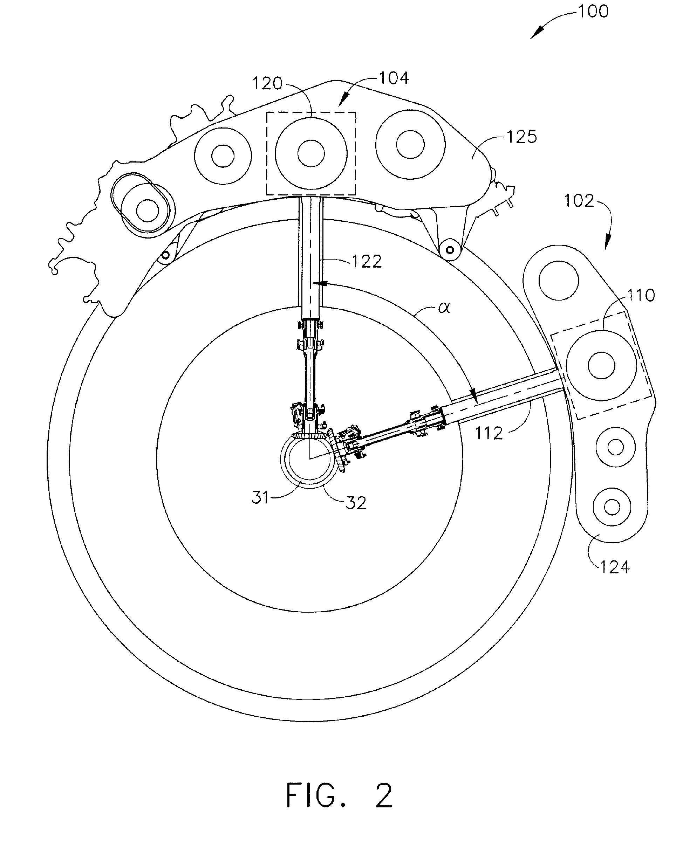

Figure 1 is a cross-sectional view of a gas turbine engine assembly 10 having a longitudinal axis 11. Figure 2 is a an end view of a portion of the exemplary power take-off system shown in Figure 1. Gas turbine engine assembly 10 includes a fan assembly 12 and a core gas turbine engine 13. Core gas turbine engine 13 includes a high-pressure compressor 14, a combustor 16 that is disposed downstream from high-pressure compressor 14, and a high-pressure turbine 18 that is coupled to high-pressure compressor 14 via a first shaft 32. In the exemplary embodiment, gas turbine engine assembly 10 also includes a low-pressure turbine 20 that is disposed downstream from core gas turbine engine 13, a multi-stage booster compressor 22, and a shaft 31 that is used to couple fan assembly 12 and booster compressor 22 to low-pressure turbine 20. Gas turbine engine assembly 10 has an intake side 28 and an exhaust side 30. In the exemplary embodiment, gas turbine engine assembly 10 is a two spool engine wherein the high-pressure compressor 14, high-pressure turbine 18 and shaft 32 form a first spool 40, and fan assembly 12, low-pressure turbine 20 and shaft 31 form a second spool 42.

In operation, air flows through fan assembly 12 and a first portion of the airflow is channeled through booster 22. The compressed air that is discharged from booster 22 is channeled through compressor 14 wherein the airflow is further compressed and delivered to combustor 16. Hot products of combustion (not shown) from combustor 16 are utilized to drive turbines 18 and 20, and turbine 20 is utilized to drive fan assembly 12 and booster 22 by way of shaft 31. Gas turbine engine assembly 10 is operable at a range of operating conditions between design operating conditions and off-design operating conditions.

Gas turbine engine assembly 10 also includes a power take-off system 100 that includes a starter 102 and a generator 104. Although starter 102 is described herein as a device that is utilized to start the core gas turbine engine 13, it should be realized, that starter 102 may also be driven by the core gas turbine engine 13 and function as a generator. Moreover, although generator 104 is described herein as an apparatus that is driven by low-pressure turbine 20 to generate electrical energy, it should be realized, that generator 104 may also drive low-pressure turbine 20 to facilitate restarting gas turbine engine assembly 10 during various operational conditions which will be discussed below.

As shown in Figures 1 and 2, starter 102 includes a motor/generator 110 and a motor shaft 112 that is coupled to, and driven by shaft 32 and thus drives or is driven by the first spool. Generator 104 includes a generator/motor 120 and a generator shaft 122 that is coupled to, and driven by shaft 31 thus drives or is driven by a second spool that includes fan assembly 12 and low-pressure turbine 20. In the exemplary embodiment, motor/generator 110 is coupled to a first accessory gearbox 124 that is coupled to core gas turbine engine 13 and generator/motor 120 is coupled to a second gearbox 125. As shown in Figure 2, shaft 112 is circumferentially offset from shaft 122 by an angle α. In one embodiment, α is between approximately 20 degrees and approximately 90 degrees. In the exemplary embodiment, α is approximately 60 degrees. This configuration allows the low-pressure turbine spool and the high-pressure turbine spool to remain separate. Moreover, the configuration eliminates the need for double stacked differential bearings, allows for power take-off shafts having a reduced diameter, and reduces the size of a "king" strut passing through the fan assembly and core gas turbine engine flowpath.

In the exemplary embodiment, shaft 112 is disposed at an axial position along axis 11 that is approximately equal to the axial position of shaft 122 along axis 11. As such, shaft 112 and shaft 122 are approximately coplanar with respect to the axial position along longitudinal axis 11.

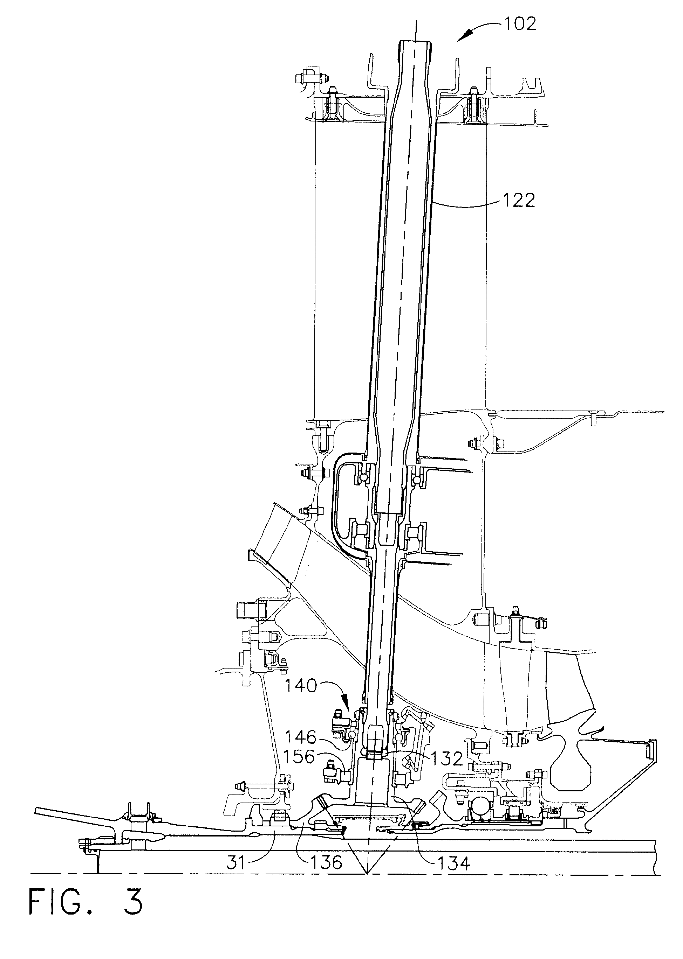

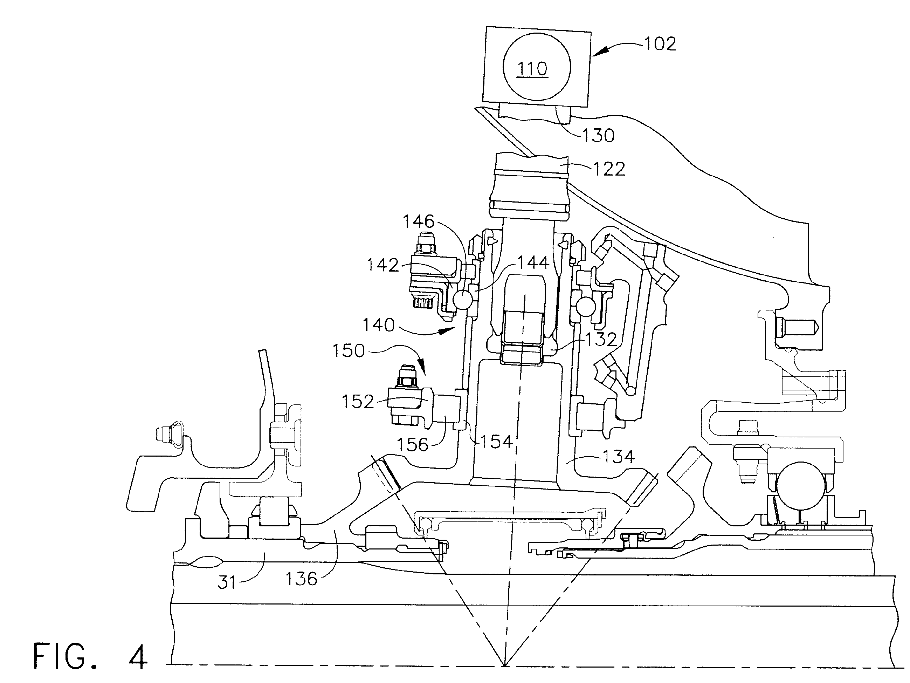

Figure 3 is a cross-sectional view of a portion of the power take-off system 100 shown in Figure 2 and Figure 4 is a cross-sectional view of a portion of the power take-off system 100 shown in Figure 3. As discussed above, generator 104 includes generator/motor 120 and generator shaft 122 that is coupled to generator/motor 120. More specifically, generator shaft 122 includes a first end 130 that is coupled to and thus driven by generator/motor 120. Generator shaft 122 also includes a second end 132 and a pinion 134 that is coupled or splined to second end 132. Moreover, gas turbine engine assembly 10 also includes a ring gear 136 that is coupled or splined to rotor shaft 31. In the exemplary embodiment, pinion 134 and ring gear 136 are each bevel gears configured such that pinion 134 is intermeshed with ring gear 136 and such that rotating shaft 31 causes ring gear 136 to rotate and thus causes pinion 134 to rotate.

As shown in Figure 4, shaft 122 may be fabricated to include one or more shaft portions that are coupled together to form a single respective shaft, and thus simplify assembly. Optionally, shaft 122 may also be fabricated as unitary components without affecting the scope of embodiments of the invention described herein.

Power take-off system 100 also includes a plurality of bearing assemblies to facilitate maintaining shaft 122 in the proper position within gas turbine engine assembly 10. Specifically, power take-off system 100 includes a first thrust bearing 140 that includes a stationary outer race 142 that is secured to a stationary structure such as a fan frame, a rotating inner race 144 that is secured to pinion 134, and a plurality of rolling elements 146 that are disposed between outer and inner races 142 and 144 respectively. During operation, thrust bearing 140 transmits any residual thrust generated by shaft 31 to ground via the stationary structure.

Power take-off system 100 includes a first roller bearing 150 that includes a stationary outer race 152 that is secured to a stationary structure such as a compressor casing or the fan frame, a rotating inner race 154 that is secured to pinion 134, and a plurality of rolling elements 156 that are disposed between outer and inner races 152 and 154 respectively. During operation, roller bearing 150 facilitates maintaining shaft 122 in a substantially fixed alignment within gas turbine engine assembly 10.

During assembly, the generator/motor 120 is coupled to gearbox 124. Shaft 122 is then coupled between generator/motor 120 and ring gear 136 such that generator/motor 120 is configured to drive or be driven by low-pressure turbine 20. In the exemplary embodiment, low-pressure turbine 20 drives generator/motor 120 such that generator/motor 120 produces additional electrical power that may be used by an aircraft when the core gas turbine engine 13 is required to operate at speeds to minimize engine thrust yet provide for increased electrical power demands.

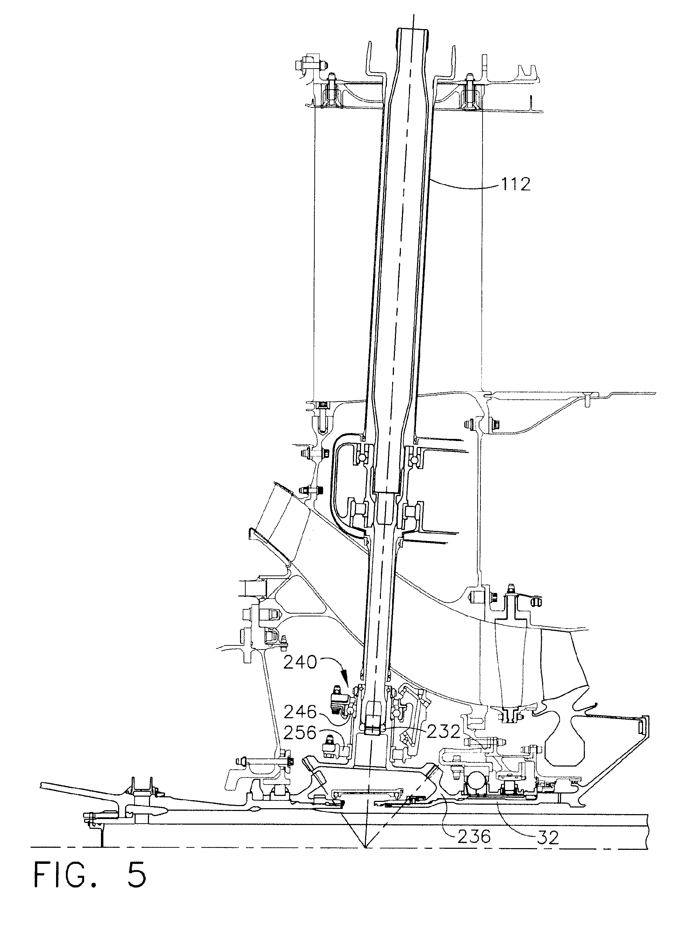

Figure 5 is a cross-sectional view of a portion of the power take-off system 100 shown in Figure 2. Specifically, Figure 5 is a cross-sectional view of starter 102. As discussed above, starter 102 includes motor/generator 110 and motor shaft 112 that is coupled to motor/generator 110. More specifically, motor shaft 112 includes a first end 230 that is coupled to and thus driven by or drives starter 102. Motor shaft 112 also includes a second end 232 and a pinion 234 that is coupled or splined to second end 232. Moreover, gas turbine engine assembly 10 also includes a ring gear 236 that is coupled or splined to rotor shaft 32. In the exemplary embodiment, pinion 234 and ring gear 236 are each bevel gears configured such that pinion 234 is intermeshed with ring gear 236 and such that rotating shaft 32 causes ring gear 236 to rotate and thus causes pinion 234 to rotate.

As shown in Figure 5, shaft 112 may be fabricated to include one or more shaft portions that are coupled together to form a single respective shaft, and thus simplify assembly. Optionally, shaft 112 may also be fabricated as unitary components without affecting the scope of embodiments of the invention described herein.

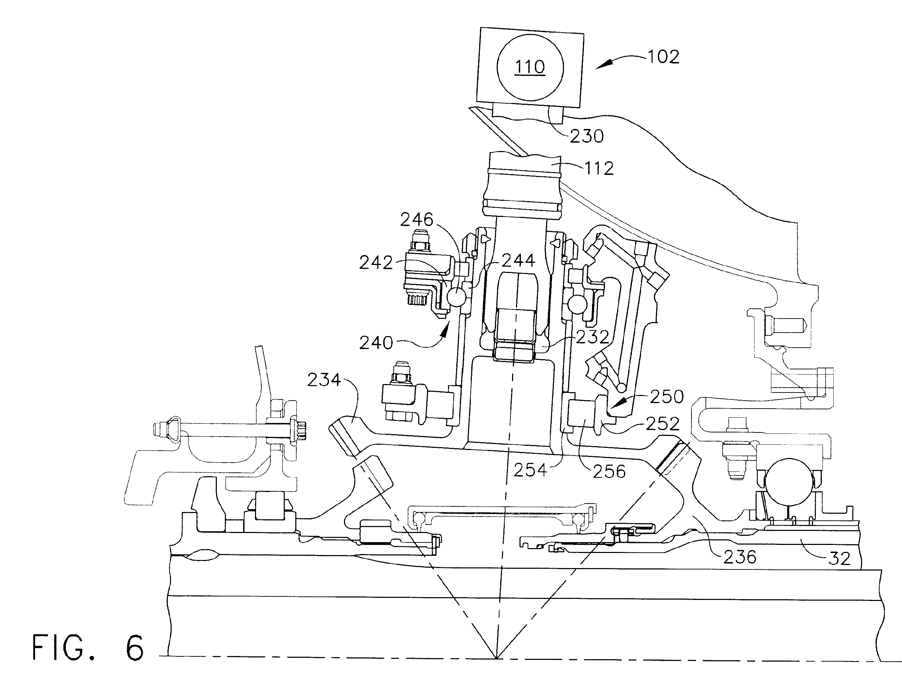

Power take-off system 100 also includes a plurality of bearing assemblies to facilitate maintaining shaft 112 in the proper position within gas turbine engine assembly 10. More specifically, and as shown in Figure 6, power take-off system 100 includes a first thrust bearing 240 that includes a stationary outer race 242 that is secured to a stationary structure such as a fan frame, a rotating inner race 244 that is secured to pinion 234, and a plurality of rolling elements 246 that are disposed between outer and inner races 242 and 244 respectively. During operation, thrust bearing 240 transmits any residual thrust generated by shaft 32 to ground via the stationary structure.

Power take-off system 100 includes a first roller bearing 250 that includes a stationary outer race 252 that is secured to a stationary structure such as a fan frame, a rotating inner race 254 that is secured to pinion 234, and a plurality of rolling elements 256 that are disposed between outer and inner races 252 and 254 respectively. During operation, roller bearing 250 facilitates maintaining shaft 112 in a substantially fixed alignment within gas turbine engine assembly 10.

During assembly, starter 102 is coupled to shaft 112 which is then coupled to ring gear 236 such that motor/generator 110 is configured to drive or be driven by high-pressure turbine 18.

During operation, starter 102 is activated to start the core gas turbine engine 13. Specifically, activating starter/generator 110 causes shaft 112 to rotate causing the high-pressure turbine spool to rotate and thus causes the core gas turbine engine 13 to start as is known in the art. In the exemplary embodiment, starting the core gas turbine engine 13 causes the low-pressure turbine 20 to rotate, thus causing generator/motor 120 to generate electrical energy. Additionally, during flight or other operations, generator/motor 120 may be utilized to assist in the restart the core gas turbine engine. Specifically, since generator 104 may function as a motor, supplying electrical power to generator 104 may cause generator 104 to function as a starter. Specifically, since generator 104 is coupled to low-pressure turbine 20 via shaft 122, operating generator 104 as a motor may cause shaft 122 to rotate the low-pressure turbine 20 and thus restart the core gas turbine engine during certain flight conditions.

Described herein is a method for assembling a gas turbine engine assembly including a core gas turbine engine and a low-pressure turbine disposed downstream from the core gas turbine engine. The method includes coupling a starter to the core gas turbine engine using a first shaft, and coupling a generator to the low-pressure turbine using a second shaft, wherein the first shaft is circumferentially offset from the second shaft by an angle α.

Also, described herein is a gas turbine engine assembly that is configured to extract relatively large amounts of power from the engine while operating the engine at low thrust conditions. Specifically, the gas turbine engine assembly described herein includes a dual input, i.e. starter 102 which may drive or be driven by the first spool 40 and generator 104 which may be driven by or drive the second spool 42. Specifically, the system described herein is configured to extract additional electrical power from the gas turbine engine while the gas turbine engine is operating at low thrust conditions and/or certain flight conditions. For example, the system described herein takes power off of two spools simultaneously in order to share the load requirements so that the overall engine operators in an efficient manner.

For the aircraft/engine mission, the second spool provides the majority of the needed aircraft power and also drives the appropriate engine accessories. Optionally, some accessories may be driven by the first spool via the starter gearbox.

As a result, additional energy is extracted from the low-pressure turbine and fan assembly to support ever increasing electrical demands. Specifically, newer aircraft are designed to require an atypically large amount of electrical power driven by the generator on the engine accessory gearbox. The power requirements during idle conditions thus require the engine to run at idle speeds that are higher than desirable in order to maintain adequate compressor stall margin. This results in thrust levels for the engine that are higher than desired for both flight idle descent points and ground idle conditions, which has both maintenance cost implications for aircraft brakes and excess fuel burn penalties for typical short range missions.

Whereas the system described herein, takes power off both shafts simultaneously in order to share the load requirements. As a result, the system described herein is relatively simple to install, and also provides a low weight solution to this problem. Moreover, the system described herein, allows for reduced thrust during ground idle conditions to reduce aircraft brake maintenance, reduced dirt ingestion, and reduced flight idle thrusts for an improved flight profile and improved short range fuel burn while still maintaining adequate compressor stall margin during high power extraction conditions.

While the invention has been described in terms of various specific embodiments, those skilled in the art will recognize that the invention can be practiced with modification within the spirit and scope of the claims.

## Claims

1. A power take-off system (100) for a gas turbine engine assembly (10), the gas turbine engine including a first spool (40) and a second spool (42), said power take-off system comprising:
a starter (102) coupled to said first spool using a first shaft (32); and
a generator (104) coupled to said second spool using a second shaft, said first shaft is circumferentially offset by said second shaft by an angle α.

2. A power take-off system (100) in accordance with claim 1, wherein said first shaft (32) is offset by said second shaft by an angle that is approximately 60 degrees.

3. A power take-off system (100) in accordance with any preceding claim, wherein said first shaft (32) is offset by said second shaft by an angle that is between approximately 20 degrees and approximately 90 degrees.

4. A power take-off system (100) in accordance with any preceding claim, further comprising:
a first ring gear (136) coupled to said first spool (40); and
a first drive pinion (134) coupled to said first shaft (32) such that said first drive pinion is intermeshed with said first ring gear and such that actuating the starter (102) causes the first spool to rotate.

5. A power take-off system (100) in accordance with any preceding claim, further comprising:
a second ring gear (236) coupled to said second spool (42); and
a second drive pinion (234) coupled to said second shaft such that said second drive pinion is intermeshed with said second ring gear and such rotating the low-pressure turbine (20) causes the generator to rotate.

6. A power take-off system (100) in accordance with any preceding claim, wherein said starter (102) comprises a motor/generator (110) that is coupled to said first shaft (32), said motor/generator configured to rotate said core gas turbine engine (13) when operating in a first mode and to generate electrical energy when operating in a second mode, and wherein said generator (104) comprises a motor/generator that is coupled to said second shaft, said motor/generator configured generate electrical energy when operating in a first mode and to rotate said low-pressure turbine (20) when operating in a second mode.

7. A gas turbine engine assembly (10) comprising:
a first spool (40);
a second spool (42); and
a power take-off system (100) comprising a starter (102) coupled to said first spool using a first shaft (32), and a generator (104) coupled to said second spool using a second shaft, said first shaft is circumferentially offset by said second shaft by an angle α.

8. A gas turbine engine assembly (10) in accordance with claim 7, wherein said first spool (40) rotates in a first direction and said second spool (42) rotates in a second opposite direction.

9. A gas turbine engine assembly (10) in accordance with claim 7 or claim 8, wherein said first shaft (32) is offset by said second shaft by an angle that is approximately 60 degrees.

10. A gas turbine engine assembly (10) in accordance with any of claims 7 to 9, wherein said first shaft (32) is offset by said second shaft by an angle that is between approximately 20 degrees and approximately 90 degrees.
